# EUROPEAN PATENT APPLICATION

(11) **EP 4 190 213 A1**
(43) Date of publication of application: **07.06.2023**
(21) Application number: 21212464.8
(22) Date of filing: 06.12.2021
(51) Int. Cl.: A47J 43/07

(54) **CHOPPER ACCESSORY FOR HAND-HELD KITCHEN APPLIANCE, AND HAND-HELD KITCHEN APPLIANCE WITH CHOPPER ACCESSORY**

(71) Applicant: BSH Hausgeräte GmbH, 81739 München (DE)
(72) Inventor: Zupanc, Anze, 2380 Slovenj Gradec (SI); Golavsek, Samo, 3312 Prebold (SI); Atelsek, Darko, 3331 Nazarje (SI)

(57) **Abstract**

Disclosed is a chopper accessory 100 for or of a hand-held kitchen appliance 1. The chopper accessory comprises a coupling piece 10, a splash guard 20, a rotatable tool 30, and a container 40. The rotatable tool 30 is configured to be coupled, by means of the coupling piece 10, to a drive unit 200 of the kitchen appliance 1. The coupling piece 10 is detachably fixable to the container 40, so as to cap the container 40, with the rotatable tool 30 extending into the container 40. The splash guard is configured to be detachably attached to the coupling piece 10, so as to at least partially cover a food processing space S within the container 40.

## Description

The present invention concerns a chopper accessory for a hand-held kitchen appliance. Furthermore, the invention concerns a hand-held kitchen appliance with such chopper accessory.

Modern electrically driven hand-held kitchen appliances may offer various functions, which may be facilitated by respective accessories. In particular, to chop food material, chopper accessories are known which not only comprise a rotatable tool couplable to an electric motor of the kitchen appliance, but also have a proper container for processing therein the respective food.

The present invention targets at providing an improved chopper accessory. It is a further object of the present invention to provide an improved hand-held kitchen appliance.

The objects are achieved by a chopper accessory according to claim 1, and by a hand-held kitchen appliance according to claim 9. Advantageous embodiments are disclosed in the dependent claims, the description and the figures.

A chopper accessory according to the present invention is designated for a hand-held kitchen appliance (such as a stick blender or a hand mixer, for example). The chopper accessory comprises a coupling piece, a splash guard, a rotatable tool, and a container. Therein, the rotatable tool is configured to be coupled, by means of the coupling piece, to a drive unit of the kitchen appliance, in particular to an electric motor the drive unit preferably comprises. By means of such coupling, the drive unit, in particular the electric motor, is configured to drive a rotation of the rotatable tool about a designated axis of rotation.

The coupling piece is detachably fixable to the container so as to cap the container, with the tool extending into the container. For instance, the coupling piece may be fixable to the container by means of a frictional connection (e.g., a (respective) screw thread the coupling piece and the container may have) and/or by means for a form-fit connection (such as at least one snap-lock means and/or at least one bayonet joint). Such fixed, the coupling piece and the container preferably secure the rotatable tool in an operation position, in which connecting the coupling piece to the drive unit provides for the coupling of the rotatable tool to the drive unit.

The splash guard is configured to be detachably attached to the coupling piece so as to at least partially cover a food processing space formed by the container. In particular, in such assembled state of the chopper accessory, the splash guard thus at least partially delimits the processing space. Preferably, the splash guard is at least partially arranged between the processing space and the coupling piece.

A hand-held kitchen appliance according to the present invention comprises a drive unit and a chopper accessory according to an embodiment of the present invention. Therein, the coupling piece of the chopper accessory is configured to be detachably mounted to the drive unit, and to thereby couple the rotatable tool to an electric motor comprised by the drive unit.

In particular, the kitchen appliance can comprise a stick blender and/or a hand mixer. In the latter case, the hand mixer may be adapted to stir or beat food by one or two whisks, and further to crush food material by means of a blender accessory. Therein, the whisks and the blender accessory may each be configured to be coupled to the drive unit of the respective hand mixer. In particular, the drive unit may comprise a first clutch portion for coupling the whisk/s, and a second clutch portion for coupling the blender accessory. In such case, the coupling piece of the chopper accessory may be configured to be combined with the drive unit so as to couple the rotatable tool with the drive unit at the first and/or at the second clutch portion.

As the splash guard covers the food reception space, particles of a respective food being processed, in the container, by the rotating tool are kept away from the coupling piece. Therefore, the coupling piece (which may comprise a clutch component and/or a gearing) remains clean during the processing, after which the splash guard may be detached from the coupling piece and easily cleaned separately, whereas no systematic cleaning of the coupling piece is necessary. Therewith, the present invention thus facilitates a disburdened utilisation of the kitchen appliance for chopping food.

The splash guard may preferably be monolithic. It may be partially or entirely made of a plastic material. It may be at least partially elastic; thereby, a particularly convenient attaching and detaching may be achieved. Advantageously, the splash guard is dishwasher safe.

According to advantageous embodiments, the splash guard is ring-shaped. In an assembled state of the chopper accessory (i.e., when the splash guard is attached to the coupling piece, and the container is fixed to the coupling piece with the rotatable tool extending into the container), the rotatable tool preferably penetrates a centre hole of such ring-shaped splash guard.

In the assembled state of the chopper accessory, a wall of the container may preferably at least partially surround the splash guard, in particular a radial outer edge thereof. (As is to be noted, in this document, if not otherwise indicated, the term "radial" and its derivatives relate to the designated axis of rotation of the rotatable tool.) In such embodiments, a gap may be left between the splash guard and the container. Such gap ensures a particularly easy fixation of the coupling piece - with the splash guard attached thereto - to the container. For example, such gap may have a width (measured in radial direction) of at most 2mm or at most 1,5mm or at most 1mm width. Therewith, respective larger pieces of processed food are inhibited to pass the splash guard and to foul the coupling piece.

According to advantageous embodiments, the splash guard is configured to be attached to the coupling piece by means of a frictional connection (such as a screw thread). Additionally or alternatively, the splash guard may be configured to be attached to the coupling piece by means of a form-fit connection, in particular, by means of at least one bayonet joint and/or at least one snap-lock means; for instance, such snap-lock means may be realised by means of at least one elastic portion the splash guard and/or the coupling piece may comprise.

In respective embodiments, such snap-lock means may be configured to require, for an attachment and/or a detachment of the splash guard, exertion of a force of at most 10N or at most 15N. Additionally or alternatively, a force necessary for realising an attachment and/or a detachment of the splash guard to the coupling piece may be at most 30N or at most 20N.

According to advantageous embodiments, the splash guard may comprise a rim portion, and the coupling piece may comprise a collar, wherein at least a part of the rim portion may be configured to be slipped over the collar for attachment of the splash guard to the coupling piece, and/or wherein at least a part of the collar may be configured to be slipped over the rim portion for attachment of the splash guard to the coupling piece.

The rim portion may include one or more clearance/s providing for an elasticity of the rim portion. Additionally or alternatively, the collar may include one or more recess/es causing an elasticity of the collar. The such produced respective elasticity may facilitate a convenient attaching and detaching. In particular, it may provide a snap-lock means as mentioned above, for attachment of the splash guard to the coupling piece.

Advantageously, the collar may preferably have a surface profile (which may comprise a depression (such as a groove) and/or a protrusion (such as a thickening)) engaging, when the rim portion is slipped over the collar or *vice versa,* with a counter profile (which may comprise a protrusion (such as a thickening) and/or a depression (such as a groove)) of the rim portion.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1a:: an exemplary embodiment of a chopper accessory according to the present invention in a disassembled state;
- Fig. 1b:: the chopper accessory of Figure 1a with the splash guard attached to the coupling piece;
- Fig. 1c:: a sectional view of the chopper accessory of Figures 1a, 1b in an assembled state;
- Fig. 2:: the splash guard of the chopper accessory of Figures 1a to 1c in perspective view; and
- Fig. 3:: a hand-held kitchen appliance according to an exemplary embodiment of the present invention.

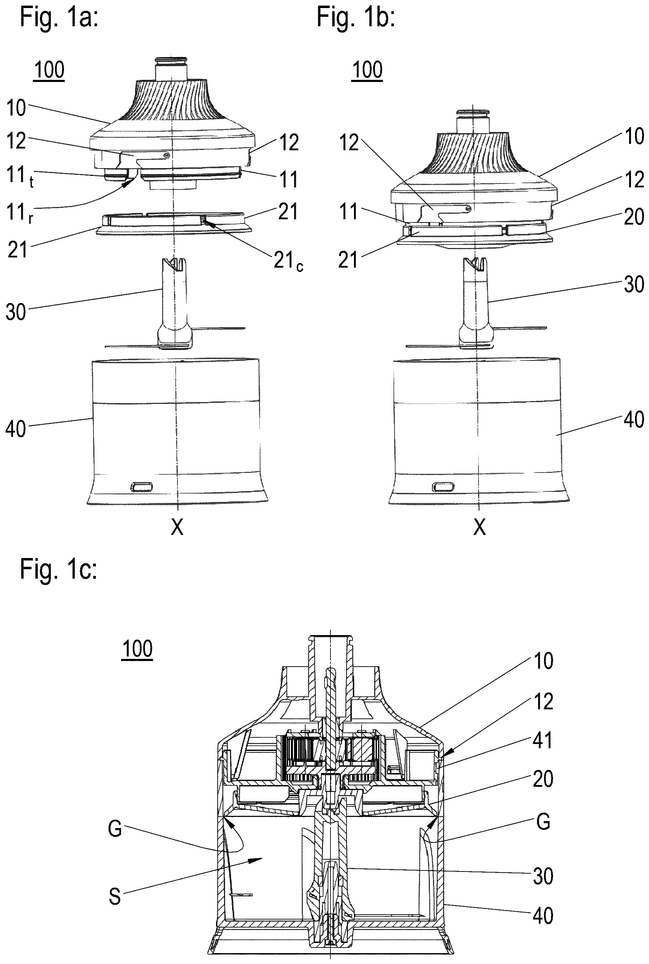

Figures 1a and 1b each show a chopper accessory 100 according to an exemplary embodiment of the present invention in an orientation designated for utilisation. The chopper accessory 100 comprises a coupling piece 10, a splash guard 20, a rotatable tool 30 and a container 40.

The coupling piece 10 is configured to be detachably fixed to a drive unit (not shown) of a hand-held appliance, and to couple the rotatable tool 30 to an electric motor of the drive unit. Thereby, the electric motor is adapted to drive the rotatable tool so as to rotate about the designated axis X of rotation.

The splash guard 20 comprises a rim portion 21 running along a circular cylinder, and the coupling piece 10 comprises a collar 11. In the embodiment depicted in Figures 1a, 1b, the rim portion 21 is configured to be slipped, for attachment of the splash guard 20, over the collar 11 of the coupling piece 10, as is shown in Figure 1b. Alternatively, the collar 11 could be configured to be slipped over the rim portion 21 (not shown).

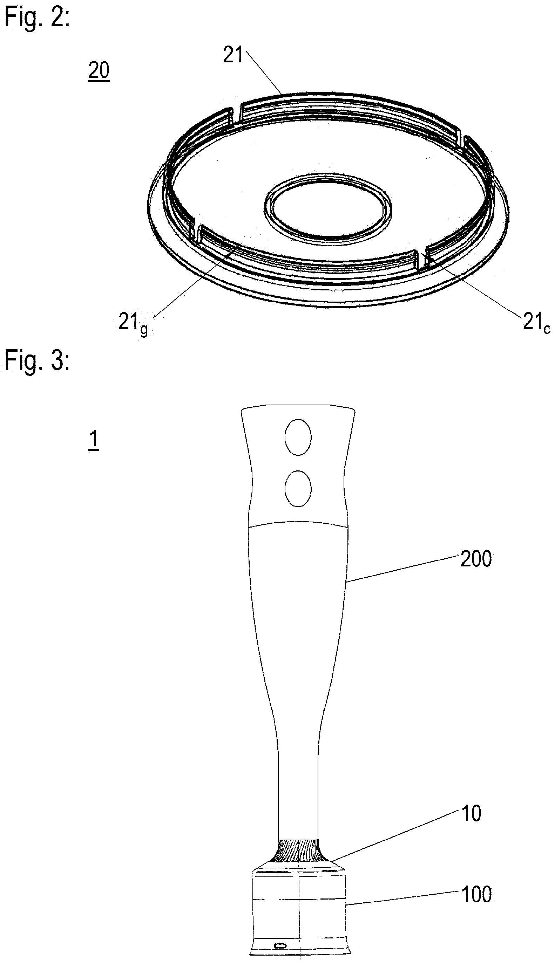

When joined, the splash guard 20 is advantageously fastened to the coupling piece 10 by means of a form-fit connection, such as a snap-lock and/or a bayonet joint. In particular, the collar 11 may preferably have a surface profile engaging, when the rim portion 21 is slipped over the collar 11, into a surface profile of the rim portion 21. Indeed, in the case depicted, the collar 11 has a thickening 11ₜ engaging in a groove (not visible in Figures 1a, 1b, but in Figure 2) arranged in the rim portion 21 of the splash guard. Additionally or alternatively, the rim portion could have a thickening to engage (when the rim portion 21 is slipped onto the collar 11) in a groove a surface of the collar 11 might have (not shown).

Recesses 11ᵣ in the collar 11 and clearances 21_{c} in the rim portion 21 facilitate the respective surface profile to snap in for engagement.

The container 40 and the coupling piece 10 are configured to be detachably attached to each other; Figure 1c provides, in a sectional view, an insight in the assembled chopper accessory 100. In the embodiment shown in Figures 1a to 1c, the attaching of the coupling piece 10 to the container 40 is realised by means of a form-fit connection which in the present case is embodied as a bayonet joint comprising angled grooves 12 (best seen in Figure 1a, 1b) in the coupling piece 10, and corresponding pins 41 (one of which seen in Figure 1c) at an inner surface of the container 40, the pins 41 each engaging in a respective one of the grooves 12.

As further seen in Figure 1c, in such assembled state of the chopper accessory 100, a centre axis thereof coincides with the designated axis X of rotation of the rotatable tool 30. Moreover, the coupling piece 10 caps the container 40, and the splash guard 20 attached to the coupling piece covers a food processing space S within the container 40 and designated to contain a respective food while this is processed by means of the rotating tool 30.

Therein, a gap G between a radially outer edge of the splash guard 20 and an inner surface of the container 40 facilitates an easy attaching of the coupling piece 10, with the splash guard 20 attached thereto, to the container 40. Measured in a radial direction with respect to the designated axis X of rotation, a width of the gap G may advantageously be at most 2mm, at most 1,5mm or at most 1mm. Such widths prevent that respective larger pieces of processed food can pass the splash guard 20 and foul the coupling piece 10.

Figure 2 shows the splash guard 20 with its clearances 21_{c} and its groove 21_{g} in perspective view. As seen in this representation, the splash guard 20 of the exemplary embodiment depicted is ring-shaped and rotational symmetric of order four.

In Figure 3, a hand-held kitchen appliance 1 according to an embodiment of the present invention is shown, which kitchen appliance 1 in the present case is a stick blender comprising a drive unit 200 and a chopper accessory 100 according to an embodiment of the present invention. In the situation shown in Figure 3, the coupling piece 10 of the chopper accessory 100 is fixed to the drive unit, whereby the rotatable tool (not visible in Figure 3) of the chopper accessory is coupled to an electric motor (also not visible in Figure 3) comprised by the drive unit 200.

Disclosed is a chopper accessory 100 for or of a hand-held kitchen appliance 1. The chopper accessory comprises a coupling piece 10, a splash guard 20, a rotatable tool 30, and a container 40. The rotatable tool 30 is configured to be coupled, by means of the coupling piece 10, to a drive unit 200 of the kitchen appliance 1. The coupling piece 10 is detachably fixable to the container 40, so as to cap the container 40, with the rotatable tool 30 extending into the container 40. The splash guard is configured to be detachably attached to the coupling piece 10, so as to at least partially cover a food processing space S within the container 40.

### Reference signs

- 1: kitchen appliance

- 10: coupling piece
- 11: collar
- 11ᵣ: recess
- 11ₜ: thickening

- 20: splash guard
- 21: rim portion
- 21_{c}: clearance
- 21_{g}: groove

- 30: rotatable tool

- 40: container

- 100: chopper accessory
- 200: drive unit

- G: gap
- X: designated axis of rotation

## Claims

1. Chopper accessory (100) for or of a hand-held kitchen appliance (1), the chopper accessory comprising a coupling piece (10), a rotatable tool (30), and a container (40),
wherein the rotatable tool (30) is configured to be coupled, by means of the coupling piece (10), to a drive unit (200) of the kitchen appliance (1),
and wherein the coupling piece (10) is detachably fixable to the container (40) so as to cap the container, with the rotatable tool (30) extending into the container (40),
**characterised by**
a splash guard (20) configured to be detachably attached to the coupling piece (10) so as to at least partially cover a food processing space (S) within the container (40).

2. Chopper accessory according to claim 1, wherein the splash guard (20) is ring-shaped.

3. Chopper accessory according to one of claim 1 or 2, wherein in an assembled state of the chopper accessory (100), a wall of the container (40) at least partially surrounds the splash guard (20).

4. Chopper accessory according to claim 3, wherein in the assembled state of the chopper accessory, a radially outer edge of the splash guard (20) is encompassed by a gap (G) separating the splash guard (20) from said wall of the container (40).

5. Chopper accessory according to one of the preceding claims, wherein the splash guard (20) is configured to be attached to the coupling piece (10) by means of a frictional connection and/or by means of a form-fit connection.

6. Chopper accessory according to one of the preceding claims, wherein the splash guard (20) comprises a rim portion (21), and the coupling piece (10) comprises a collar (11), wherein
- at least a part of the rim portion (21) is configured to be slipped over the collar (11) for attachment of the splash guard (20) to the coupling piece (10) and/or
- at least a part of the collar (11) is configured to be slipped over the rim portion (21) for attachment of the splash guard (20) to the coupling piece (10).

7. Chopper accessory according to one of the preceding claims, wherein the splash guard (20) is at least partially elastic.

8. Chopper accessory according to one of the preceding claims, wherein the splash guard (20) is dishwasher safe.

9. Hand-held kitchen appliance (1) comprising a drive unit (200) and a chopper accessory (100) according to one of the preceding claims, wherein the coupling piece (10) of the chopper accessory is configured to be detachably mounted to the drive unit (200), and to thereby couple the rotatable tool (30) to an electric motor comprised by the drive unit (200).
